# EUROPEAN PATENT APPLICATION

(11) **EP 4 632 607 A1**
(43) Date of publication of application: **15.10.2025**
(21) Application number: 25168273.8
(22) Date of filing: 03.04.2025
(51) Int. Cl.: G06F 21/54

(54) **CLUSTERING STRINGS FOR COMPUTER SYSTEM ALERTS**

(30) Priority: 11.04.2024 US 202418632375
(71) Applicant: Cylance Inc., Plano, TX 75024 (US)
(72) Inventor: GRAVES, Laura Micah, Waterloo, ON, N2K 0A7 (CA); LOMBARDI, Robert Joseph, Waterloo, ON, N2K 0A7 (CA)
(74) Representative: MERH-IP Matias Erny Reichl Hoffmann Patentanwälte PartG mbB

(57) **Abstract**

Systems, methods, and software can be used to clustering strings. In some aspects, a method includes: obtaining a pair of string elements, wherein the pair of string elements comprises a first string element and a second string element, the first string element comprises one or more first strings, the second string element comprises one or more second strings; separating the one or more first strings into a set of first string terms and the one or more second strings into a set of second string terms; generating one or more string term distances based on the set of first string terms and the set of second string terms; generating a distance between the first string element and the second string element based on the one or more string term distances; and providing the distance to a clustering algorithm to generate a plurality of clusters.

## Description

### TECHNICAL FIELD

The present disclosure relates to clustering strings for computer system alerts.

### BACKGROUND

In some cases, a computer security system uses alerts to identify activities in a monitored computer system or network, that may pose security risks. Different alerts may be generated when different activities are performed, e.g., accessing a particular resource, receiving or transmitting content that includes particular components, executing software code that includes specific routines or instructions. The computer security system can analyze these alerts to determine whether the monitored computer system or network may be under attack.

### DESCRIPTION OF DRAWINGS

FIG. 1 is a schematic diagram showing an example system that performs clustering analysis for strings, according to an implementation.
FIG. 2 is a flowchart showing an example method for clustering analysis for strings, according to an implementation.
FIG. 3 illustrates a high-level architecture block diagram of a computer according to an implementation.

Like reference numbers and designations in the various drawings indicate like elements.

### DETAILED DESCRIPTION

In some cases, the amount of the computer alerts may be large because the system may be configured to be cautionary and lean towards generating more alerts to be safe. These large amount of computer alerts needs to be processed to identify the type and risk levels. In some cases, the computer system alerts can be represented in strings. Thus, an automatic system is needed to process these strings to group the similar alerts into the same clusters. This would reduce the number of alerts for further analysis and improve the speed and accuracy when identifying the security risks.

In some cases, clustering algorithms, e.g., machine learning clustering algorithms, can be used to cluster datapoints. The clustering algorithms rely on a distance function to calculate distances between these datapoints, and then use the distances as metrices to determine different clusters of the datapoints. However, traditional distance functions for strings may not be suitable to compare strings that represent computer alerts, e.g., file paths or terminal commands, because these distance functions lack the ability to differentiate between meaningful differences and non-meaningful differences of the strings.

The Levenshtein distance is an example of string distance function. The normalized Levenshtein distance between "bin/bash" and "bin/date" = 0.375, while the normalized Levenshtein distance between "C:/Users/lauragraves" and "C:/Users/robertlombardi" = 0.558. Here, two semantically different but short and lexically similar paths, i.e., "bin/bash" and "bin/date", which represent two different UNIX structures, are marked as more similar (less distant) than two semantically very similar paths, i.e., "C:/Users/lauragraves" and "C:/Users/robertlombardi", which represent paths to two user data folders.

This discrepancy grows when we consider paths or commands with long, pseudorandom substrings or timestamps, which may often be included in strings that represent security alerts.

When we run machine learning clustering algorithms on security alerts using this distance, the algorithm may group "bin/bash" and "bin/date" in the same cluster, and group the two user data folders in different cluster. This prevents meaningful clustering for alert reduction, and leads to an abundance of repetitive, low-quality alerts that both slow down the system and impede triage. This also prevents the alert analysis system from finding meaningful patterns in the alerts. If an attacker were to use something like a pseudorandom install folder to try to circumvent security analysis, failure to algorithmically identify and group these events slows down investigation and response.

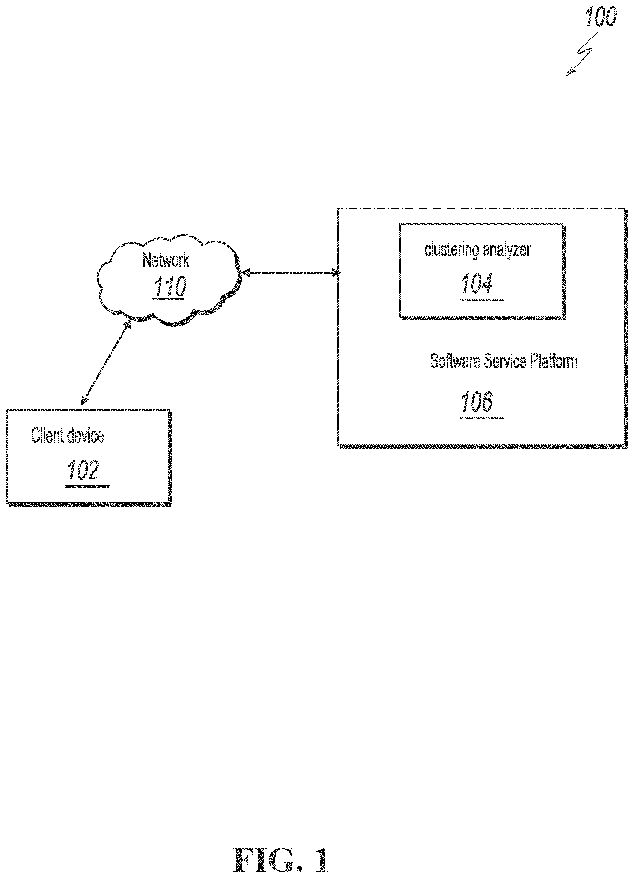

In some implementations, a string distance calculation algorithm can be tailored to account for semantically-similar parts in the strings. This string distance calculation algorithm can separate the strings into different string items, comparing these string items based on their similarity. The comparison takes account of their length, entropy, and specific matching characteristics by using different weights. These weights can be configured as distance parameters in the calculation. The distance calculated by using the string distance calculation algorithm more accurately reflects the level of semantical similarity of the string. By providing these distances to the clustering algorithms, more effective clusters can be generated. FIGS. 1-3 and associated descriptions provide additional details of these implementations.

FIG. 1 is a schematic diagram showing an example system 100 that performs clustering analysis for strings, according to an implementation. At a high level, the example system 100 includes a software service platform 106 that is communicatively coupled with a client device 102 over a network 110.

The client device 102 represents an electronic device that provides the strings to be analyzed for clustering. In some cases, the client device 102 can send the strings to the software service platform 106 for clustering analysis. In some implementations, the strings can represent computer system alerts. In these cases, the client device 102 can include one or more software that monitors the operation of the client device 102 or a computer network that is connected with the client device 102. The client device 102 can receive computer system alerts when triggering events occur. These triggering events can be configured by a user, an administrator, software algorithms, or any combinations therefore. The client device 102 can process the alert to generate the strings that represent the information of the alert, including e.g., the fingerprint of the code that triggers the alert, the file path of the code, the command line that is issued by the code to trigger the alert, and etc. Alternatively or in combination, the client device 102 can send the information of the alert to the software service platform 106 for the software service platform 106 to generate the strings for analysis. The client device 102 can be configured to send the strings or information of the alerts periodically or based on configured threshold or event trigger. In some cases, the software service platform 106 can send the output of the clustering analysis to the client device 102.

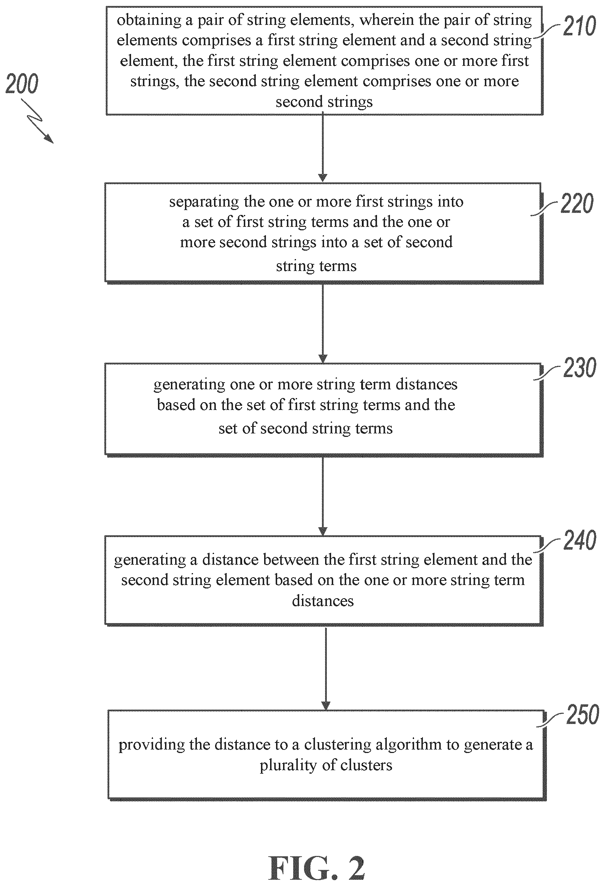

The software service platform 106 represents an application, a set of applications, software, software modules, hardware, or any combination thereof that performs clustering analysis for the strings. The software service platform 106 can be an application server, a service provider, or any other network entity. The software service platform 106 can be implemented using one or more computers, computer servers, or a cloud-computing platform. The software service platform 106 includes a clustering analyzer 104. The clustering analyzer 104 represents an application, a set of applications, software, software modules, hardware, or any combination thereof that receives a set of strings and generates one or more clusters. Each cluster includes one or more strings. In some cases, the clustering analysis can be performed periodically or based on certain configured thresholds or event triggers. In some implementations, the clustering analyzer 104 can process each pair of strings in the set of strings to calculate a distance between each string in the set with each of the remaining string in the set. The clustering analyzer 104 can provide this distance to a clustering algorithm to generate the clusters. FIGS. 2-3 and associated descriptions provide additional details of these implementations.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or a combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flowchart showing an example method 200 for clustering analysis for strings, according to an implementation. The example method 200 can be implemented by a software service platform, e.g., the software service platform 106 shown in FIG. 1. The example method 200 shown in FIG. 2 can be implemented using additional, fewer, or different operations, which can be performed in the order shown or in a different order.

At 210, a pair of string elements is obtained. The pair of string elements includes a first string element and a second string element. In some cases, the pair of string elements may be obtained from a set of string elements for the clustering analysis. For example, a set of string elements may be received for analysis. Each string element in the set of string elements can be paired with each of the remaining string element in the set. In this case, the number of string elements in the set is N, where N is a positive integer. Then there are N(N-1)/2 pairs of string elements are formed in the set of string elements. For each pair of the string elements, a distance between the two string elements in the pair will be calculated, as will be discussed in later steps of the method 200.

In some cases, each string element may include one or more strings.

In one example, each string element may represent a computer system alert. The computer system alert may include one or more indicators of the computer system alert. For example, a computer system may be configured to generate a computer system alert when a triggering event occurs. The triggering event may be an execution of a particular executable file on the computer system. The generated computer system alert may include one or more indicators that represent respective aspect of the triggering event. These indicators can include, e.g., a file path indicator that represents the file location of the particular executable file, a command indicator that represents the execution command of the executable file that triggers the alert, an executable code indicator that is generated based on the particular executable file itself. In one example, the executable code indicator can be a hash output of the binary code of the particular executable file. In this example, a hashing function can be performed on the binary code of the particular executable file to generate a hashing output. The hashing output can be the executable code indicator. The executable code indicator thus provides a fingerprint of the executable code that triggers the alert. In some cases, a cryptographical hashing algorithm can be used as the hashing function. Examples of the cryptographical hashing algorithm include Secure Hash Algorithm 256-bit (SHA-256). Alternatively or additionally, a non-cryptographical hashing algorithm can be used as the hashing function. Examples of the non-cryptographical hashing algorithm include VHASH. In a cryptographical hashing algorithm, e.g., SHA-256, a small variation in the input may result in a completely different hash output. On the other hand, for a non-cryptographical hashing algorithm, a small variation in the input may result a small variation of the hash output. Alternatively or additionally, a non-cryptographical hashing algorithm can be a locality-sensitive hashing algorithm so that inputs that are close enough (according to a distance) will give identical hashes. For example, given a first executable file which is a malware, and a second executable file which is a polymorphic version of the first executable file with few modifications, then the use of locality-sensitive hashing algorithm will give close or similar results. It enables to reduce the number of alerts by gathering similar threats.

Table 1 lists some example string elements that represent computer system alerts:

**Table 1 example string elements that represent computer system alerts**

| SE (String Element ) | Executable Code Indicator | File Path Indicator | Command Indicator |
|---|---|---|---|
| 1 | F571B3FEAEBC562 D846AAEAB90724 3AB1F8805610543 B21C8B9844A626 C1841 | c:\windows\microsoft. net\framework64\v4.0. 30319\csc.exe | "C:\Windows\Microsoft.NET\Fram ework64\v4.0.30319\csc.exe" /noconfig /fullpaths @"C:\Windows\TEMP\3ecp1ys3\3 ecplys3.cmdline" |
| 2 | F571B3FEAEBC562 D846AAEAB90724 3AB1F8805610543 B21C8FB9844A62 6C1841 | c:\windows\microsoft. net\framework64\v4.0. 30319\csc.exe | "C:\Windows\Microsoft.NET\Fram ework64\v4.0.30319\csc.exe" /noconfig /fullpaths @"C:\Windows\TEMP\mnnh5vg3\ mnnh5vg3.cmdline" |
| 3 | F571B3FEAEBC562 D846AAEAB90724 3AB1F8805610543 B21C8FB9844A62 6C1841 | c:\windows\microsoft. net\framework64\v4.0. 30319\csc.exe | "C:\Windows\Microsoft.NET\Fram ework64\v4.0.30319\csc.exe" /noconfig /fullpaths @"C:\Windows\TEMP\a0w5gmse\ a0w5gmse.cmdline" |
| 4 | F571B3FEAEBC562 D846AAEAB90724 3AB1F8805610543 B21C8FB9844A62 6C1841 | c:\windows\microsoft. net\framework64\v4.0. 30319\csc.exe | "C:\Windows\Microsoft.NET\Fram ework64\v4.0.30319\csc.exe" /noconfig /fullpaths @"C:\Windows\TEMP\2qcf0ajy\2q cf0ajy.cmdline" |

The computer system alerts in Table 1 are triggered by the same executable files, but with different commands. Therefore, they have the executable code indicator and the same file path indicator, however they have a different command indicator because the command lines for each triggering event corresponding to the alert are different.

In this example, there are 4 string elements (SE1, SE2, SE3, and SE4) in Table 1. The following 6 pairs can be formed: (SE1, SE2), (SE1, SE3), (SE1, SE4), (SE2, SE3), (SE2, SE4), and (SE3, SE4). The distance in each pair will be calculated in the following steps.

In some cases, the types of indicators that form the string elements representing the alert can be configured. For example, the computer system can record a number of attributes of the triggering event including e.g., triggering time, execution duration, etc. Some or all of these attributes can be recorded as an individual string in the string element in addition to or as alternative to the executable code indicator, file path indicator, or command indicator discussed previously. Additionally or alternatively, some or all of these attributes can be concatenated or otherwise combined or processed to generate one or more strings that represent more than one of these attributes.

At step 220, for each string element in the pair, each string in the string element is separated into a set of string items. In some implementations, the separation can be performed by using separators. Each separator can be one or more characters that are used to separate the string into string elements. The separators can be preconfigured. In one example, the separators can include the following set of characters: {/, \, -, _}. In some cases, other separators can also be included, e.g., "I". In some cases, different separators can be configured for different indicators. Additionally or alternatively, no separator may be configured for some indicators. For example, for the executable code indicator, no separator is defined. In this case, the string that represents the executable code indicator will have only one string item that is the same as the string. On the other hand, by using {/, \, -, _} as the separators, the string that represents the file path Indicator in SE1 in Table 1 can be separated into the following set of 6 string items: {c:, windows, microsoft.net, framework64, v4.0.30319, csc.exe}. Similarly, the string that represents the command indicator in SE1 in Table 1 can be separated into the following set of string items: {C:, Windows, Microsoft.NET, Framework64, v4.0.30319, csc.exe", noconfig, fullpaths @"C:, Windows, TEMP, 3ecp1ys3, 3ecp1ys3.cmdline}. The set of string items can be different if different separators are configured, e.g., if "@" is also configured for the string that represents the command indicator, then the "fullpaths @"C:" will be separated into 2 different string items.

At 230, a string term distance is calculated between the corresponding strings of each string element in the pair based on the sets of string items. In some cases, the string term distance is calculated by comparing the string items of different string elements.

In some cases, the string term distance can be calculated between each corresponding string items. The string term distance can be calculated based on whether the string term matches, whether the length of the string terms matches, the entropy of the string items, or any combination thereof. In one example, if two string items are the same, a match parameter is used as the string item distance. If two string items are different, then the entropy of each string term is calculated and added. The sum of the entropy can be multiplied by an entropy parameter. If the two string terms are different but have the same length, e.g., the same number of characters, a length parameter can be added to the string term distance. The string distance can be calculated as the sum of the string item distance.

In one example for illustration, a pair of string elements has the first string element and the second string element. The first string element has the following first string for the command indicator:
c:\windows\system32\windowspowershell\v1.0\powershell.exe
the first string is separated into the following set of first string items: {c:, windows, system32, windowspowershell, v1.0, powershell.exe}

The second string element has the following second string for the command indicator:
c:\windows\system32\window~1\v1.0\powershell.exe
the second string is separated into the following set of second string items: {c:, windows, system32, windowspowershell, v1.0, powershell.exe}
{c:, windows, system32, window~1, v1.0, powershell.exe}

In this example, the match parameter is set to 1, the length parameter is set to 0.25, and the entropy parameter is set to 0.75/100 = 0.0075.

Following is calculation of the string item distance based on the comparison of each string items in the set of first string items and the set of the second string items:

| | First string items | Second string items | string item distance |
|---|---|---|---|
| Terms: | c: | c: | +1 (match parameter) |
| Terms: | windows | windows | +1 (match parameter) |
| Terms: | system32 | system32 | +1 (match parameter) |
| Terms: | windowspowershell | window~1 | + 0.0075 * (3.33 + 2.75) / 100=0.046 |
| Terms: | v1 | v1 | +1 (match parameter) |
| Terms: | 0 | 0 | +1 (match parameter) |
| Terms: | powershell. exe | powershell. exc | +1 (match parameter) |

As shown in the above example, 6 string items in the command indicators of the first string element and the second string element are the same. Specifically, the first 3 and the last 3 string items in the set of first string items and the second of string items match each other. So match element with value = 1 is used for the string item distance of these string items. The 4^{th} string items of the set of first string items and the second of string items are different. They do not have the same number of characters, so the length parameter is not used. The entropy of "windowspowershell" is 3.33. The entropy of "window~1" is 2.75. Thus the string item distance between these two string items is calculated as the sum of these two entropies multiplied by the entropy parameter 0.0075.

In this example, the entropy of the string item is calculated by using Shannon's entropy formula. Shannon's entropy of a string can be calculated based on: H = -Σp(i)log₂p(i), H represents the entropy value, p(i) represents the probability that the i-th character would appear in the string. p(i) is calculated based on number of the appearances of the i-th character in the string. For example, in "windowspowershell", the character "w" appears 3 times, there are a total of 17 characters, thus p(i) for the character "w" = 3/17 = 0.176. log₂ is the base-2 logarithm function. Σ is the summation function for all different characters in the string.

The string item distances calculated above can be added up to a sum of string item distances = 1+1+1+0.046+1+1+1=6.046.

A string similarity can be calculated by dividing the sum of string item distances by the number of string items = 6.046/7= 0.864.

The string distance can be calculated by subtracting the string similarity from 1 = 1-0.864=0.136.

In general, the entropy parameter and the length parameter are configured to make the string item distance less than 1 when the string items are different. The string item distance can approach 1 if the string items are different but close. Thus, the string similarity is larger if the string items are similar. Dividing the sum of string item distance by the number of string items normalizes the string similarity so that the string similarity does not exceed 1. The larger the string similarity, the smaller the string distance.

Additionally or alternatively, other distance parameters can be used in the calculation of the string item distance to account for different aspects of similarities between the string items. For example, a case matching parameter can be added for string items that have non case-sensitive matches. If two string items represent the same user, a user matching parameter can be added. Type parameters can be configured for string items that represent similar types, e.g., ".docx" and ".doc". Both represent WORD document extensions, so a type parameter can be added if two string items use these different extensions. Name convention matching parameters can be configured for renaming conventions, e.g., FILENAME.doc and FILENAME(1).doc may represent the same file , renamed according to the naming convention of the operating system. Thus if two string items have these different names, a naming convention matching parameter can be added to the calculation of string item distance account for such similarity. By configuring these different distance parameters, the string distance can be calculated to intelligently represent the differences between two strings.

In some cases, the two strings may have different numbers of string items. For example, the first string may have 6 string items, and the second string may have 9 items. In this case, the 6 items in the first string are compared with the first 6 items in the second string to calculate the string item distances for each pair of the string items. The string item distances are summed and then divided by the larger number of the string items among the two strings, in this case 9, to obtain the string similarity. Therefore, the extra number of string items in the second string will reduce the value of string similarity and, thus, increase the value of the string distance.

At 240, the distance between the first string element and the second string element is calculated based on the one or more string term distances. In some cases, the calculation is performed by summing the string distance for each corresponding string in the string elements. In one example, each string element has three strings that represent an executor code indicator, file path indictor, and command indicator. In this example, the string distance between the executor code indicator of the first string element and the executor code indicator of the second string element is calculated based on the previous discussion. Similarly, the string distance between the file path indicator of the first string element and the file path indicator of the second string element, and the string distance between the command indicator of the first string element and the command indicator of the second string element, are also calculated. The distance between the first string element and the second string element can be calculated as the sum of these three string distances.

At 250, the string element distances are provided to a clustering algorithm to generate a plurality of clusters. In some implementations, the steps 220-240 are repeated for each pair of string elements in the set of string elements to calculate the distances for each pair. Therefore, for each string element in the set, the distance between the string element and each other string element in the set is obtained. These distances are provided to a clustering algorithm to generate different clusters of string elements.

In general, a clustering algorithm can be used to group a set of data points into different clusters. Each cluster represents a group of data points that are relatively close to each other. The clustering algorithm takes input of the distances between these data points and groups the data points based on these distances, as well as some thresholds. Example of thresholds can include maximum distance within a cluster, minimum distance between neighbors, etc. These thresholds can be configured or training by using machine learning algorithms. Example of the clustering algorithm can include density-based spatial clustering of applications with noise (DBSCAN), K-means clustering algorithm, Gaussian Mixture Model algorithm, Balance Iterative Reducing and Clustering using Hierarchies (BIRCH) algorithm, Affinity Propagation clustering algorithm, Mean-Shift clustering algorithm, Ordering Points to Identify the Clustering Structure (OPTICS) algorithm, Agglomerative Hierarchy clustering algorithm, Divisive Hierarchical clustering algorithm, Mini-Batch K-means algorithm, and Spectral Clustering algorithm.

In some cases, after obtaining the different clusters of string elements, common expressions of the string elements can be generated. In some cases, the common expression of the string elements can include wildcard characters that represent the different string elements in the cluster.

For example, if a cluster includes the following three command indicators:

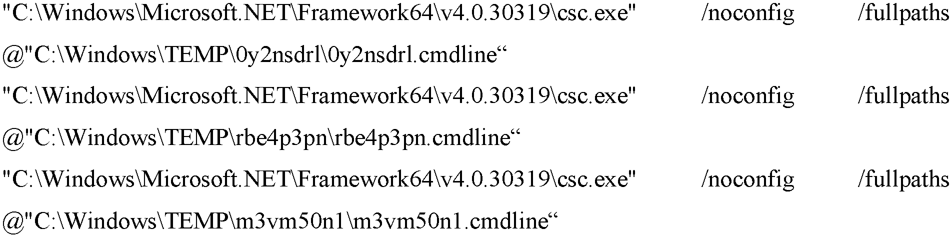

A common expression of the cluster can be

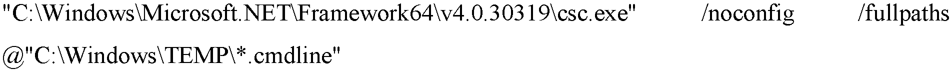

In this case, by using the wildcard "*"to represent the differences between these indicators, the common expression can represent all the three command indicators. Furthermore, this common expression can be used to compare additional alerts that are received. If the additional alerts match this common expression, the additional alerts can be grouped into the same cluster.

While the descriptions above use string elements that represent computer system alerts as an example, the method 200 can be used to cluster string elements representing other information. For example, the method 200 can be used to compare and group strings that represent Internet addresses, network commands, command line arguments, process/file paths, process/file names, arguments of API calls, or other Operating System (OS) specific system information.

In some cases, the output of the method 200, including e.g., the clustering result, the common expression, or a combination thereof can be outputted at the user interface of the software service platform that performs the analysis. In some cases, other information of the clustering process, e.g., information of the distance between the clusters, information of the data elements within the clusters, the configured distance parameters, can also be outputted. Alternatively or additionally, the clustering result, common expression, and the other information of the clustering process can be sent to a different device for outputting.

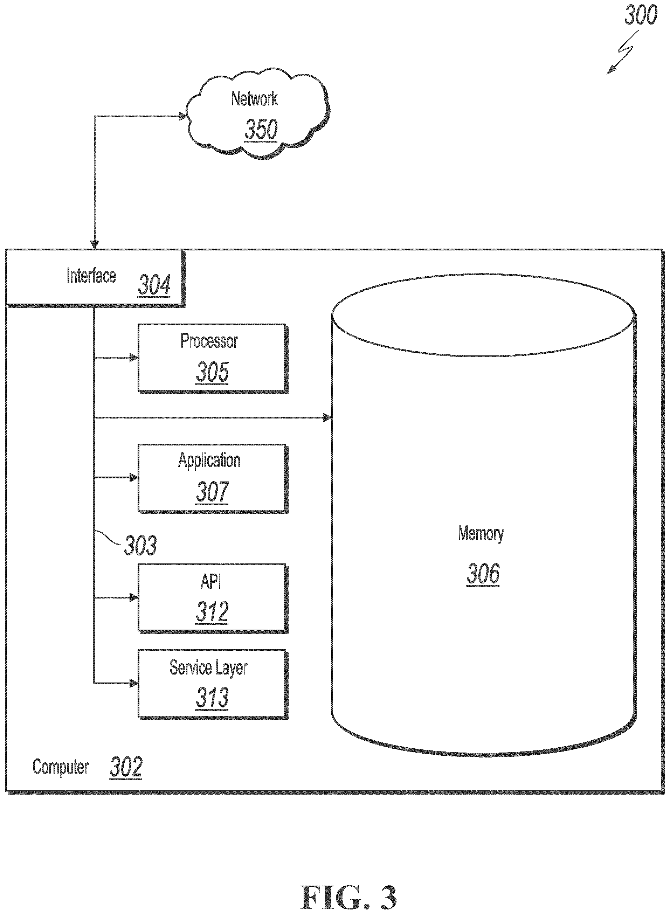

FIG. 3 is a high-level architecture block diagram showing a computer 302 coupled with a network 350, according to an implementation. The computer 302 can also be used to implement the operations discussed in FIGS. 1-2. The described illustration is only one possible implementation of the described subject matter and is not intended to limit the disclosure to the single described implementation. Those of ordinary skill in the art will appreciate the fact that the described components can be connected, combined, or used in alternative ways, consistent with this disclosure.

The network 350 facilitates communications between the computer 302 and other devices. In some cases, a user, e.g., an administrator, can access the computer 302 from a remote network. In these or other cases, the network 350 can be a wireless or a wireline network. In some cases, a user can access the computer 302 locally. In these or other cases, the network 350 can also be a memory pipe, a hardware connection, or any internal or external communication paths between the components.

The computer 302 includes a computing system configured to perform the algorithm described in this disclosure. For example, the computer 302 can be used to implement the software service platform 106 or the client device 102 shown in FIG. 1. In some cases, the algorithm can be implemented in an executable computing code, e.g., C/C++ executable code. Alternatively, or in combination, the algorithm can be implemented in an application program, e.g., EXCEL. In some cases, the computer 302 can include a standalone LINUX system that runs batch applications. In some cases, the computer 302 can include mobile or personal computers that run the application program.

The computer 302 may include an input device, such as a keypad, keyboard, touch screen, microphone, speech recognition device, or another device that can accept user information, and/or an output device that conveys information associated with the operation of the computer 302, including digital data, visual and/or audio information, or a GUI.

The computer 302 can serve as a client, network component, a server, a database or other persistency, or the like. In some implementations, one or more components of the computer 302 may be configured to operate within a cloud-computing-based environment.

At a high level, the computer 302 is an electronic computing device operable to receive, transmit, process, store, or manage data and information. According to some implementations, the computer 302 may also include or be communicably coupled with an application server, e-mail server, web server, caching server, streaming data server, business intelligence (BI) server, and/or other server.

The computer 302 can receive requests over network 350 from a client application (e.g., executing on a user device) and respond to the received requests by processing said requests in an appropriate software application. In addition, requests may also be sent to the computer 302 from internal users (e.g., from a command console or by another appropriate access method), external or third parties, other automated applications, as well as any other appropriate entities, individuals, systems, or computers.

Each of the components of the computer 302 can communicate using a system bus 303. In some implementations, any and/or all the components of the computer 302, both hardware and/or software, may interface with each other and/or the interface 304 over the system bus 303, using an application programming interface (API) 312 and/or a service layer 313. The API 312 may include specifications for routines, data structures, and object classes. The API 312 may be either computer language-independent or -dependent and refer to a complete interface, a single function, or even a set of APIs. The service layer 313 provides software services to the computer 302. The functionality of the computer 302 may be accessible for all service consumers using this service layer. Software services, such as those provided by the service layer 313, provide reusable, defined business functionalities through a defined interface. For example, the interface may be software written in JAVA, C++, or other suitable language providing data in Extensible Markup Language (XML) format or another suitable format. While illustrated as an integrated component of the computer 302, alternative implementations may illustrate the API 312 and/or the service layer 313 as stand-alone components in relation to other components of the computer 302. Moreover, any or all parts of the API 312 and/or the service layer 313 may be implemented as child or sub-modules of another software module or hardware module, without departing from the scope of this disclosure.

The computer 302 includes an interface 304. Although illustrated as a single interface 304 in FIG. 3, two or more interfaces 304 may be used according to particular needs, configurations, or particular implementations of the computer 302. The interface 304 is used by the computer 302 for communicating with other systems in a distributed environment connected to the network 350 - (whether illustrated or not). Generally, the interface 304 comprises logic encoded in software and/or hardware in a suitable combination and operable to communicate with the network 350. More specifically, the interface 304 may comprise software supporting one or more communication protocols associated with communications such that the network 350 or the interface's hardware are operable to communicate physical signals.

The computer 302 includes a processor 305. Although illustrated as a single processor 305 in FIG. 3, two or more processors may be used according to particular needs, configurations, or particular implementations of the computer 302. Generally, the processor 305 executes instructions and manipulates data to perform the operations of the computer 302. In some cases, the processor 305 can include a data processing apparatus.

The computer 302 also includes a memory 306 that holds data for the computer 302. Although illustrated as a single memory 306 in FIG. 3, two or more memories may be used according to particular needs, configurations, or particular implementations of the computer 302. While memory 306 is illustrated as an integral component of the computer 302, in alternative implementations, memory 306 can be external to the computer 302.

The application 307 comprises an algorithmic software engine providing functionality according to particular needs, configurations, or particular implementations of the computer 302. Although illustrated as a single application 307, the application 307 may be implemented as multiple applications 307 on the computer 302. In addition, although illustrated as integral to the computer 302, in alternative implementations, the application 307 can be external to the computer 302.

There may be any number of computers 302 associated with, or external to, the system 300 and communicating over network 350. Further, the terms "client," "user," and other appropriate terminology may be used interchangeably, as appropriate, without departing from the scope of this disclosure. Moreover, this disclosure contemplates that many users may use one computer 302, or that one user may use multiple computers 302.

Described implementations of the subject matter can include one or more features, alone or in combination.

For example, in a first implementation, a method, comprising: obtaining a pair of string elements, wherein the pair of string elements comprises a first string element and a second string element, the first string element comprises one or more first strings, the second string element comprises one or more second strings; separating the one or more first strings into a set of first string terms and the one or more second strings into a set of second string terms; generating one or more string term distances based on the set of first string terms and the set of second string terms; generating a distance between the first string element and the second string element based on the one or more string term distances; and providing the distance to a clustering algorithm to generate a plurality of clusters.

The foregoing and other described implementations can each, optionally, include one or more of the following features:

A first feature, combinable with any of the following features, wherein the one or more string term distances are generated based on one or more distance parameters, wherein the one or more distance parameters comprise a length parameter and an entropy parameter.

A second feature, combinable with any of the previous or following features, wherein wherein the one or more string term distances are generated based on one or more distance parameters, wherein the one or more distance parameters comprises a user matching parameter, a case matching parameter, or a name convention matching parameter.

A third feature, combinable with any of the previous or following features, wherein the distance between the first string element and the second string element is generated based on a sum of the one or more string term distances.

A fourth feature, combinable with any of the previous or following features, wherein the first string element and the second string element represent computer alerts, wherein each first string of the one or more first strings and each second string of the one or more second strings represent an indicator of a computer alert.

A fifth feature, combinable with any of the previous or following features, wherein the indicator of the computer alert indicates a command or a file path.

A sixth feature, combinable with any of the previous features, wherein the clustering algorithm is a density-based spatial clustering of applications with noise (DBSCAN) algorithm.

In a second implementation, a computer-readable medium containing instructions which, when executed, cause an electronic device to perform operations comprising: obtaining a pair of string elements, wherein the pair of string elements comprises a first string element and a second string element, the first string element comprises one or more first strings, the second string element comprises one or more second strings; separating the one or more first strings into a set of first string terms and the one or more second strings into a set of second string terms; generating one or more string term distances based on the set of first string terms and the set of second string terms; generating a distance between the first string element and the second string element based on the one or more string term distances; and providing the distance to a clustering algorithm to generate a plurality of clusters.

The foregoing and other described implementations can each, optionally, include one or more of the following features:
A first feature, combinable with any of the following features, wherein the one or more string term distances are generated based on one or more distance parameters, wherein the one or more distance parameters comprise a length parameter and an entropy parameter.

A second feature, combinable with any of the previous or following features, wherein wherein the one or more string term distances are generated based on one or more distance parameters, wherein the one or more distance parameters comprises a user matching parameter, a case matching parameter, or a name convention matching parameter.

A third feature, combinable with any of the previous or following features, wherein the distance between the first string element and the second string element is generated based on a sum of the one or more string term distances.

A fourth feature, combinable with any of the previous or following features, wherein the first string element and the second string element represent computer alerts, wherein each first string of the one or more first strings and each second string of the one or more second strings represent an indicator of a computer alert.

A fifth feature, combinable with any of the previous or following features, wherein the indicator of the computer alert indicates a command or a file path.

A sixth feature, combinable with any of the previous features, wherein the clustering algorithm is a density-based spatial clustering of applications with noise (DBSCAN) algorithm.

In a third implementation, a computer-implemented system, comprising: obtaining a pair of string elements, wherein the pair of string elements comprises a first string element and a second string element, the first string element comprises one or more first strings, the second string element comprises one or more second strings; separating the one or more first strings into a set of first string terms and the one or more second strings into a set of second string terms; generating one or more string term distances based on the set of first string terms and the set of second string terms; generating a distance between the first string element and the second string element based on the one or more string term distances; and providing the distance to a clustering algorithm to generate a plurality of clusters.

The foregoing and other described implementations can each, optionally, include one or more of the following features:
A first feature, combinable with any of the following features, wherein the one or more string term distances are generated based on one or more distance parameters, wherein the one or more distance parameters comprise a length parameter and an entropy parameter.

A second feature, combinable with any of the previous or following features, wherein wherein the one or more string term distances are generated based on one or more distance parameters, wherein the one or more distance parameters comprises a user matching parameter, a case matching parameter, or a name convention matching parameter.

A third feature, combinable with any of the previous or following features, wherein the distance between the first string element and the second string element is generated based on a sum of the one or more string term distances.

A fourth feature, combinable with any of the previous or following features, wherein the first string element and the second string element represent computer alerts, wherein each first string of the one or more first strings and each second string of the one or more second strings represent an indicator of a computer alert.

A fifth feature, combinable with any of the previous or following features, wherein the indicator of the computer alert indicates a command or a file path.

A sixth feature, combinable with any of the previous features, wherein the clustering algorithm is a density-based spatial clustering of applications with noise (DBSCAN) algorithm.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

The present disclosure also comprises the following enumerated example embodiments (EEEs), which are not claims.
EEE 1. A method, comprising:
   obtaining a pair of string elements, wherein the pair of string elements comprises a first string element and a second string element, the first string element comprises one or more first strings, the second string element comprises one or more second strings;
   separating the one or more first strings into a set of first string terms and the one or more second strings into a set of second string terms;
   generating one or more string term distances based on the set of first string terms and the set of second string terms;
   generating a distance between the first string element and the second string element based on the one or more string term distances; and
   providing the distance to a clustering algorithm to generate a plurality of clusters.
EEE 2. The method of EEE 1, wherein the one or more string term distances are generated based on one or more distance parameters, wherein the one or more distance parameters comprise a length parameter and an entropy parameter.
EEE 3. The method of EEE 1, wherein the one or more string term distances are generated based on one or more distance parameters, wherein the one or more distance parameters comprises a user matching parameter, a case matching parameter, or a name convention matching parameter.
EEE 4. The method of EEE 1, wherein the distance between the first string element and the second string element is generated based on a sum of the one or more string term distances.
EEE 5. The method of EEE 1, wherein the first string element and the second string element represent computer alerts, wherein each first string of the one or more first strings and each second string of the one or more second strings represent an indicator of a computer alert.
EEE 6. The method of EEE 5, wherein the indicator of the computer alert indicates a command or a file path.
EEE 7. The method of EEE 1, wherein the clustering algorithm is a density-based spatial clustering of applications with noise (DBSCAN) algorithm.
EEE 8. A computer-readable medium containing instructions which, when executed, cause an electronic device to perform operations comprising:
   obtaining a pair of string elements, wherein the pair of string elements comprises a first string element and a second string element, the first string element comprises one or more first strings, the second string element comprises one or more second strings;
   separating the one or more first strings into a set of first string terms and the one or more second strings into a set of second string terms;
   generating one or more string term distances based on the set of first string terms and the set of second string terms;
   generating a distance between the first string element and the second string element based on the one or more string term distances; and
   providing the distance to a clustering algorithm to generate a plurality of clusters.
EEE 9. The computer-readable medium of EEE 8, wherein the one or more string term distances are generated based on one or more distance parameters, wherein the one or more distance parameters comprise a length parameter and an entropy parameter.
EEE 10. The computer-readable medium of EEE 8, wherein the one or more string term distances are generated based on one or more distance parameters, wherein the one or more distance parameters comprises a user matching parameter, a case matching parameter, or a name convention matching parameter.
EEE 11. The computer-readable medium of EEE 8, wherein the distance between the first string element and the second string element is generated based on a sum of the one or more string term distances.
EEE 12. The computer-readable medium of EEE 8, wherein the first string element and the second string element represent computer alerts, wherein each first string of the one or more first strings and each second string of the one or more second strings represent an indicator of a computer alert.
EEE 13. The computer-readable medium of EEE 12, wherein the indicator of the computer alert indicates a command or a file path.
EEE 14. The computer-readable medium of EEE 8, wherein the clustering algorithm is a density-based spatial clustering of applications with noise (DBSCAN) algorithm.
EEE 15. A computer-implemented system, comprising:
   one or more computers; and
   one or more computer memory devices interoperably coupled with the one or more computers and
   having tangible, non-transitory, machine-readable media storing one or more instructions that, when executed by the one or more computers, perform one or more operations comprising:
      obtaining a pair of string elements, wherein the pair of string elements comprises a first string element and a second string element, the first string element comprises one or more first strings, the second string element comprises one or more second strings;
      separating the one or more first strings into a set of first string terms and the one or more second strings into a set of second string terms;
      generating one or more string term distances based on the set of first string terms and the set of second string terms;
      generating a distance between the first string element and the second string element based on the one or more string term distances; and
      providing the distance to a clustering algorithm to generate a plurality of clusters.
EEE 16. The computer-implemented system of EEE 15, wherein the one or more string term distances are generated based on one or more distance parameters, wherein the one or more distance parameters comprise a length parameter and an entropy parameter.
EEE 17. The computer-implemented system of EEE 15, wherein the one or more string term distances are generated based on one or more distance parameters, wherein the one or more distance parameters comprises a user matching parameter, a case matching parameter, or a name convention matching parameter.
EEE 18. The computer-implemented system of EEE 15, wherein the distance between the first string element and the second string element is generated based on a sum of the one or more string term distances.
EEE 19. The computer-implemented system of EEE 15, wherein the first string element and the second string element represent computer alerts, wherein each first string of the one or more first strings and each second string of the one or more second strings represent an indicator of a computer alert.
EEE 20. The computer-implemented system of EEE 19, wherein the indicator of the computer alert indicates a command or a file path.

## Claims

1. A method, comprising:
obtaining a pair of string elements, wherein the pair of string elements comprises a first string element and a second string element, the first string element comprises one or more first strings, the second string element comprises one or more second strings;
separating the one or more first strings into a set of first string terms and the one or more second strings into a set of second string terms;
generating one or more string term distances based on the set of first string terms and the set of second string terms;
generating a distance between the first string element and the second string element based on the one or more string term distances; and
providing the distance to a clustering algorithm to generate a plurality of clusters.

2. The method of claim 1, wherein the one or more string term distances are generated based on one or more distance parameters, wherein the one or more distance parameters comprise a length parameter and an entropy parameter.

3. The method of any previous claim, wherein the one or more string term distances are generated based on one or more distance parameters, wherein the one or more distance parameters comprise a user matching parameter, a case matching parameter, or a name convention matching parameter.

4. The method of any previous claim, wherein the distance between the first string element and the second string element is generated based on a sum of the one or more string term distances.

5. The method of any previous claim, wherein the first string element and the second string element represent computer alerts, wherein each first string of the one or more first strings and each second string of the one or more second strings represent an indicator of a computer alert.

6. The method of claim 5, wherein the indicator of the computer alert indicates a command or a file path.

7. The method of any previous claim, wherein the clustering algorithm is a density-based spatial clustering of applications with noise (DBSCAN) algorithm.

8. A computer-readable medium containing instructions which, when executed, cause an electronic device to perform operations as recited in any of claims 1 to 7.

9. A computer-implemented system, comprising:
one or more computers; and
one or more computer memory devices interoperably coupled with the one or more computers and
having tangible, non-transitory, machine-readable media storing one or more instructions that, when executed by the one or more computers, perform one or more operations as recited in any of claims 1 to 7.
